# EUROPEAN PATENT APPLICATION

(11) **EP 4 737 859 A2**
(43) Date of publication of application: **06.05.2026**
(21) Application number: 26159715.7
(22) Date of filing: 31.10.2020
(51) Int. Cl.: G01C 21/34

(54) **PARKING INFORMATION TRANSMISSION METHOD AND APPARATUS**

(62) Divisional of application: 20959314.4
(71) Applicant: Shenzhen Yinwang Intelligent Technologies Co., Ltd., Shenzhen, Guangdong 518110 (CN)
(72) Inventor: WU, Ji, Shenzhen, 518110 (CN); XU, Lingfeng, Shenzhen, 518110 (CN); LI, Zhen, Shenzhen, 518110 (CN)
(74) Representative: Pfenning, Meinig & Partner mbB

(57) **Abstract**

A parking information transmission method and apparatus are provided, to resolve a prior-art problem of low parking efficiency. A first vehicle receives parking lot information from a server on a driving path to a destination, that is, a first parking lot, where the parking lot information includes an identifier of a second parking lot and a navigation route of the first vehicle to the second parking lot (S205). The first vehicle displays a prompt option, to prompt a user of the first vehicle that the first parking lot is congested and whether to change the destination to the second parking lot. The first vehicle detects an operation that the user chooses to change the destination to the second parking lot, and updates a displayed navigation route to the first parking lot to the navigation route to the second parking lot (S206). The parking lot information is received from the server. In this way, after arriving at the first parking lot, the vehicle does not wait for excessively long time due to congestion in the first parking lot. This can enhance parking efficiency of the vehicle, and improve user experience.

## Description

### TECHNICAL FIELD

Embodiments of this application relate to the field of internet of vehicles technologies, and in particular, to a parking information transmission method and apparatus.

### BACKGROUND

Currently, with continuous increase of vehicle ownership, parking locations of parking lots in most areas (for example, enterprises, communities, and shopping malls) can hardly meet parking requirements of existing vehicles. A vehicle may drive to a destination but there is no idle parking space in the destination. Consequently, a vehicle owner can only spend a large amount of time in searching for another parking lot, and time and energy of the vehicle owner are seriously wasted.

### SUMMARY

Embodiments of this application provide a parking information transmission method and apparatus, to resolve a prior-art problem of low parking efficiency.

According to a first aspect, an embodiment of this application provides a parking information transmission method, applied to a first vehicle. The method may be performed by a terminal device that belongs to the first vehicle or a chip in the terminal device. The method includes: sending destination information to a server, where the destination information indicates that a destination of a first vehicle is a first parking lot; and receiving parking lot information from the server on a driving path of the first vehicle to the first parking lot, where the parking lot information includes an identifier of a second parking lot and a navigation route of the first vehicle to the second parking lot, and a first distance between the second parking lot and the first parking lot is not greater than a first threshold; displaying a prompt option, where the prompt option is used to prompt a user of the first vehicle that the first parking lot is congested and whether to change the destination to the second parking lot; and detecting an operation that the user chooses to change the destination to the second parking lot, and updating a displayed navigation route to the first parking lot to the navigation route to the second parking lot.

According to the foregoing method, when receiving the parking lot information from the server, the first vehicle driving into the first parking lot may prompt the user that the first parking lot is congested and whether to change the destination to the second parking lot near the first parking lot. Therefore, when detecting the operation that the user chooses to change the destination to the second parking lot, the first vehicle updates the navigation route. In this way, after arriving at the first parking lot, the vehicle does not wait for excessively long time due to congestion in the first parking lot. This can enhance parking efficiency of the vehicle, and improve user experience.

In a possible design, the method further includes: receiving parking lot information from the server, where the parking lot information includes one or more of the following: first estimated duration from an entrance of the first parking lot to a parking space; second estimated duration from a current location of the first vehicle to the entrance of the first parking lot; third estimated duration from an entrance of the second parking lot to a parking space; fourth estimated duration from the current location of the first vehicle to the entrance of the second parking lot; or a distance between the second parking lot and the first parking lot; and when displaying the prompt option, displaying prompt information, where the prompt information includes the parking lot information. According to the foregoing solution, when the prompt option is displayed, the user may be further prompted to estimate information such as arrival duration and a distance. In this way, the user can determine, based on the parking lot information, whether to change the destination to the second parking lot, improving user experience.

In a possible design, the parking lot information further includes a recommendation priority of the first parking lot and a recommendation priority of the second parking lot. The recommendation priority indicates a recommendation level of the parking lot, and the recommendation priority is determined based on a congestion status and a parking space occupation status of the parking lot. According to the foregoing method, a difference in congestion degrees between the first parking lot and the second parking lot can be intuitively presented to the user, improving user experience.

In a possible design, the method further includes: if an operation that the user chooses not to change the destination to the second parking lot is detected, when determining that the first parking lot is congested, sending congestion status information of the first parking lot to the server. According to the foregoing method, the first vehicle may still travel into the first parking lot when the user chooses not to change the destination to the second parking lot, and report the congestion status information of the first parking lot to the server when determining that the first parking lot is congested. In this way, the server can learn of congestion status of the first parking lot in real time, enhancing parking efficiency.

In a possible design, the determining that the first parking lot is congested includes: when one or more of the following conditions 1 to 4 are met, determining that the first parking lot is congested:
condition 1: an average travel speed at which the first vehicle reaches the entrance of the first parking lot from a first location is less than a first speed threshold, where a distance between the first location and the entrance of the first parking lot is a second length;
condition 2: first duration in which the first vehicle reaches the entrance of the first parking lot from the first location exceeds a third threshold;
condition 3: second duration in which the first vehicle reaches a target parking space in the first parking lot from the entrance of the first parking lot exceeds a fourth threshold; and
condition 4: third duration in which the first vehicle reaches the target parking space in the first parking lot from the first location exceeds a fifth threshold.

According to the foregoing method, when congestion occurs at an entrance of the first parking lot or inside the parking lot, the first vehicle may report congestion status information of the first parking lot. In this way, the server can accurately learn of congestion status of the first parking lot, enhancing parking efficiency.

In a possible design, after the sending congestion status information of the first parking lot to the server, the method further includes: receiving a detection indication from the server, where the detection indication indicates the first vehicle to track a congestion status of the first parking lot; and in a process in which the first vehicle arrives at the first parking lot, sending, to the server at intervals of specified duration, information indicating a road condition of the first parking lot.

According to the foregoing method, after reporting the congestion status information of the first parking lot, the first vehicle may continuously detect the congestion status of the first parking lot based on an indication of the server, and periodically report the congestion status, to improve data authenticity.

In a possible design, the method further includes: when the first vehicle enters the second parking lot, receiving a third route planned by the server, where a destination of the third route is a target parking space in the second parking lot; and driving to the target parking space based on the third route.

According to the foregoing method, when driving into the second parking lot, the first vehicle may obtain, by using the server, the navigation route for driving to the target parking space. In this way, the user of the first vehicle does not need to manually search for a parking space in the second parking lot, enhancing parking efficiency and improving user experience.

In a possible design, the method further includes: in a process of driving to the target parking space based on the third route, when a first parking space is detected, sending parking space information of the first parking space to the server. The parking space information of the first parking space includes one or more of a parking space location, a parking space identifier, confidence, or detection time of the first parking space. The confidence indicates a probability that the first parking space is an idle parking space.

According to the foregoing method, in the process in which the first vehicle enters the target parking space, the parking space information of the parking space may be reported when the parking space is detected, to notify the server whether the parking space is an idle parking space. In this way, the server can update a parking space occupation status of the parking lot in real time, and provide the idle parking space to the user as the target parking space, enhancing parking efficiency.

According to a second aspect, an embodiment of this application provides a parking information transmission method. The method includes: A server receives destination information sent by a first vehicle. The destination information indicates that a destination of the first vehicle is a first parking lot. When the server determines based on statistical data, that the first parking lot is congested, the server sends, to the first vehicle, parking lot information that describes a recommended parking lot. The statistical data includes at least congestion status information of the first parking lot that is reported by N vehicles when the first parking lot is congested. A difference between a moment at which the N vehicles report the congestion status information of the first parking lot and a moment at which the destination information is received is less than or equal to first preset duration. The parking lot information includes an identifier of a second parking lot and a navigation route of the first vehicle to the second parking lot. A first distance between the second parking lot and the first parking lot is not greater than a first threshold.

According to the foregoing method, after obtaining that the destination of the first vehicle is the first parking lot, the server may recommend the second parking lot near the first parking lot to the first vehicle when the first parking lot is congested. This can reduce time spent by a user due to congestion, and enhance parking efficiency.

In a possible design, the N vehicles include only a second vehicle, congestion status information of the first parking lot reported by the second vehicle indicates that the first parking lot is congested. The statistical data further includes confidence of the second vehicle. The confidence of the second vehicle indicates accuracy of congestion statuses of a plurality of parking lots that are historically reported by the second vehicle. That the server determines based on statistical data, that the first parking lot is congested includes: When the confidence of the second vehicle is greater than or equal to a first confidence threshold, the server determines that the first parking lot is congested.

According to the foregoing design, when congestion information of the first parking lot reported by only one vehicle is received and the confidence of the vehicle is greater than or equal to a first confidence threshold, the server may determine that the first parking lot is congested. In this way, the server can update congestion status of the first parking lot, enhancing parking efficiency of a user.

In a possible design, N is greater than 1 and less than a first preset quantity. Congestion status information of the first parking lot reported by each of the N vehicles indicates that the first parking lot is congested. Confidence of the N vehicles indicates accuracy of congestion statuses of a plurality of parking lots that are historically reported by the N vehicles. That the server determines based on statistical data, that the first parking lot is congested includes: When determining that an average value of the confidence of the N vehicles is greater than a third threshold, the server determines that the first parking lot is congested.

According to the foregoing method, when receiving congestion status information of the first parking lot reported by a relatively small quantity of a plurality of vehicles, the server may determine, based on that first confidence of the plurality of vehicles is greater than the third threshold, that the first parking lot is congested. This can improve decision accuracy, enhance parking efficiency, and improve user experience.

In a possible design, the method further includes: When the first vehicle enters the second parking lot and the server determines, based on the statistical data, that a first parking space is an idle parking space, the server sends a third route to the first vehicle. A destination of the third route is the first parking space. The statistical data further includes parking space information of the first parking space that is reported by M vehicles when the M vehicles detect the first parking space in the second parking lot. The parking space information of the first parking space indicates whether the first parking space is an idle parking space. A difference between a moment at which the M vehicles report the parking space information of the first parking space and a moment at which the first vehicle enters the second parking lot is less than or equal to second preset duration.

According to the foregoing method, when the first vehicle enters the second parking lot and the server determines, based on parking space information of the first parking space recently reported by a vehicle, that the first parking space is the idle parking space, the server may recommend the first parking space to the first vehicle. In this way, the first vehicle can directly drive to the idle parking space based on navigation, saving parking time of a user and enhancing parking efficiency.

In a possible design, the M vehicles include only a third vehicle. Parking space information of the first parking space reported by the third vehicle includes confidence of the first parking space. The confidence of the first parking space indicates a probability that the first parking space is an idle parking space. That the server determines based on the statistical data, that a first parking space is an idle parking space includes: When the confidence of the first parking space is greater than or equal to a second confidence threshold, the server determines that the first parking space is an idle parking space.

According to the foregoing method, when parking space information of the first parking space reported by only one vehicle is received and the confidence of the vehicle is greater than or equal to a second confidence threshold, the server may determine that the first parking space is an idle parking space. Further, the server may update a parking space occupation status of the second parking lot. When the first vehicle enters the second parking lot, the server may recommend the idle parking space to the first vehicle based on the parking space occupation status of the second parking lot. This can enhance parking efficiency of a user.

In a possible design, M is greater than 1 and less than a second preset quantity. The parking space information of the first parking space reported by the M vehicles includes confidence of the first parking space. The confidence of the first parking space indicates a probability that the first parking space is an idle parking space. That the server determines based on the statistical data, that a first parking space is an idle parking space includes: When determining that an average value of the confidence of the first parking space reported by the M vehicles is greater than a third threshold, the server determines that the first parking space is an idle parking space.

According to the foregoing method, the server determines, based on parking space information of the first parking space reported by a plurality of vehicles, whether the first parking space is an idle parking space. Further, the server may update a parking space occupation status of the second parking lot. When the first vehicle enters the second parking lot, the server may recommend the idle parking space to the first vehicle based on the parking space occupation status of the second parking lot. This can enhance parking efficiency of a user.

According to a third aspect, an embodiment of this application further provides a parking information transmission apparatus. The apparatus includes modules/units for performing the method in any one of the possible implementations of the first aspect or the second aspect. These modules/units may be implemented by hardware, or may be implemented by hardware by executing corresponding software.

According to a fourth aspect, an embodiment of this application further provides a parking information transmission apparatus, including a processor and a memory. The memory is configured to store computer program code, and the computer program code includes computer instructions. When the computer instructions are executed by the processor, the parking information transmission apparatus is enabled to perform the method in any one of the possible implementations of the first aspect or the second aspect.

According to a fifth aspect, an embodiment of this application further provides a computer-readable storage medium, including a computer program. When the computer program is run on a computer, the computer is enabled to perform the method in any one of the possible implementations of the first aspect or the second aspect.

According to a sixth aspect, an embodiment of this application provides a chip. The chip is coupled to a memory in an electronic device, and performs any one of the possible technical solutions in the first aspect or the second aspect of embodiments of this application. In this embodiment of this application, "coupled" means that two components are directly or indirectly combined with each other.

According to a seventh aspect, an embodiment of this application provides a computer program product. The computer program product includes a computer program (which may also be referred to as code or instructions). When the computer program is run, a computer is enabled to perform the method in any one of the possible implementations of the first aspect or the second aspect.

According to an eighth aspect, an embodiment of this application further provides a graphical user interface on an electronic device. The electronic device has a display, one or more memories, and one or more processors. The one or more processors are configured to execute one or more computer programs stored in the one or more memories. The graphical user interface includes a graphical user interface displayed when the electronic device performs any possible technical solution in the first aspect of embodiments of this application.

According to a ninth aspect, an embodiment of this application further provides a parking system, including a terminal device configured to perform the method in one of the possible implementations of the first aspect, and a server configured to perform the method in one of the possible implementations of the second aspect.

For a technical effect that can be achieved by any one of the possible technical solutions in the third aspect to the ninth aspect, refer to descriptions of technical effects that can be achieved by the method in any one of the possible implementations of the first aspect or the second aspect. Details are not described herein again.

### BRIEF DESCRIPTION OF DRAWINGS

FIG. 1A is a schematic diagram of a structure of a possible communication system according to an embodiment of this application;
FIG. 1B is a schematic diagram of a structure of a possible terminal device according to an embodiment of this application;
FIG. 2 is a schematic flowchart of a possible parking information transmission method according to an embodiment of this application;
FIG. 3A is a schematic diagram of possible congestion at an entrance of a parking lot according to an embodiment of this application;
FIG. 3B is a schematic diagram of possible congestion inside a parking lot according to an embodiment of this application;
FIG. 3C shows a possible user interface according to an embodiment of this application;
FIG. 3D shows another possible user interface according to an embodiment of this application;
FIG. 4 is a schematic flowchart of a possible parking space information reporting method according to an embodiment of this application;
FIG. 5 is a schematic diagram of a possible parking space in a second parking lot according to an embodiment of this application;
FIG. 6 is a schematic flowchart of another possible parking information transmission method according to an embodiment of this application;
FIG. 7 is a schematic flowchart of still another possible parking information transmission method according to an embodiment of this application;
FIG. 8 is a schematic diagram of a structure of a possible parking information transmission apparatus according to an embodiment of this application; and
FIG. 9 is a schematic diagram of a structure of another possible parking information transmission apparatus according to an embodiment of this application.

### DESCRIPTION OF EMBODIMENTS

To make objectives, technical solutions, and advantages of this application clearer, the following describes technical solutions in embodiments of this application in detail with reference to the accompanying drawings in embodiments of this application.

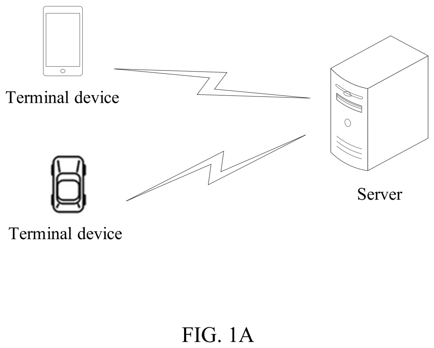

FIG. 1A is a schematic diagram of a structure of an applicable communication system according to an embodiment of this application. The communication system includes a terminal device and a server.

The terminal device may be a wireless terminal. The wireless terminal may mean a device that provides a user with voice and/or data connectivity, a handheld device with a wireless connection function, or another processing device connected to a wireless modem.

The wireless terminal may be a mobile terminal, for example, a mobile phone (or also referred to as a "cellular" phone), and a computer having a mobile terminal. For example, the wireless terminal may be a portable, pocket-sized, handheld, computer-built-in or vehicle-mounted mobile apparatus, which exchanges a language and/or data with a radio access network. For example, the wireless terminal may be a device such as a mobile phone, a wearable device (such as a smart watch), a vehicle-mounted terminal, a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The wireless terminal may also be referred to as a subscriber unit (subscriber unit), a subscriber station (subscriber station), a mobile station (mobile station), a mobile station (mobile), a remote station (remote station), an access point (access point), a remote terminal (remote terminal), an access terminal (access terminal), a user terminal (user terminal), a user agent (user agent), a user device (user device), or user equipment (user equipment).

The server may be an Internet of Vehicles platform or a server that manages and serves for a parking lot, and includes an application server or a map cloud server that provides a service for a high-precision map and a navigation map. A specific deployment form of the server is not limited in this application, and may be specifically deployed on a cloud, or may be an independent computer device, a chip, or the like. For example, the server may be a mobile data center (mobile data center, MDC). The MDC is a computing platform for intelligent driving, and may provide lane-level positioning.

For example, the terminal device may communicate with the server. The terminal device may report congestion status information of the parking lot to the server. After receiving the congestion status information reported by the terminal device, when determining, based on the congestion status information of the parking lot reported by the terminal device, that a first parking lot is congested, the server sends, to the terminal device whose destination is the first parking lot, an identifier of a second parking lot and a navigation route to the second parking lot. Further, the terminal device whose destination is the first parking lot may prompt a user to change the destination to the second parking lot. In this way, the user may learn that the parking lot is congested before a vehicle enters the parking lot. This can reduce time spent by the user due to parking, and save time and energy of the user.

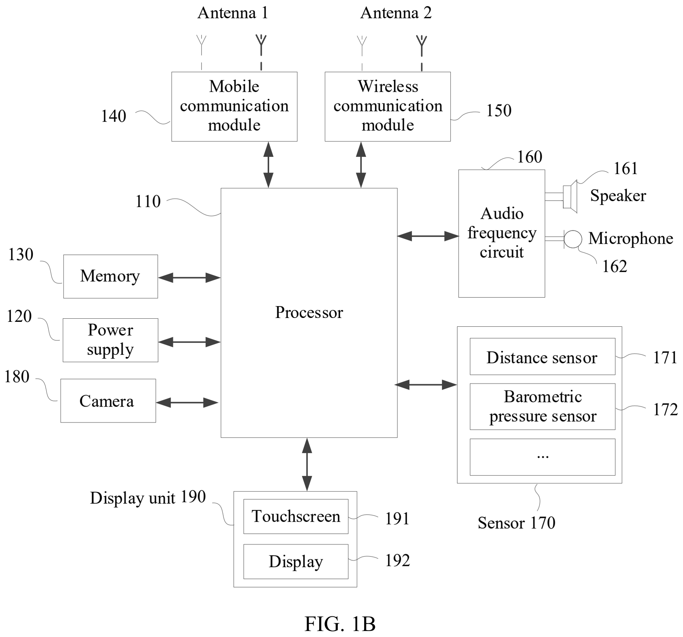

FIG. 1B is a schematic diagram of an optional hardware structure of a terminal device.

The terminal device may include:
a processor 110, a power supply 120, a memory 130, an antenna 1, an antenna 2, a mobile communication module 140, a wireless communication module 150, an audio frequency circuit 160, a speaker 161, a microphone 162, a sensor 170, a camera 180, a display unit 190, and the like. The sensor 170 may include a distance sensor 171, a barometric pressure sensor 172, and the like.

It can be understood that, a structure illustrated in this embodiment of this application does not constitute a specific limitation on the terminal device. In some other embodiments, the terminal device may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), and a baseband processor. Different processing units may be independent components, or may be integrated into one or more processors.

A memory may be further disposed in the processor 110, and is configured to store instructions and data. In some embodiments, the memory in the processor 110 is a cache memory. The memory may store an instruction or data that has been recently used or cyclically used by the processor 110. If the processor 110 needs to use the instruction or the data again, the processor may directly invoke the instruction or the data from the memory. This avoids repeated access, reduces waiting time of the processor 110, and improves system efficiency.

The terminal device further includes a power supply 120 (such as a battery) configured to supply power to the components. Optionally, the power supply 120 may be logically connected to the processor 110 by using a power management system, to implement functions such as charging and discharging management and power consumption management by using the power management system.

The memory 130 may be configured to store computer-executable program code. The executable program code includes the instruction. The memory 130 may include a program storage area and a data storage area. The program storage area may store an operating system, an application program (such as navigation) required by at least one function, and the like. The data storage area may store data (for example, congestion status information and parking space information generated by the terminal device) created in a process of using the terminal device, and the like. In addition, the memory 130 may include a high-speed random access memory, and may further include a nonvolatile memory, for example, at least one magnetic disk storage device, a flash memory device, or a universal flash memory (universal flash storage, UFS). The processor 110 runs the instruction stored in the memory 130 and/or the instruction stored in the memory disposed in the processor, to execute various function applications of the terminal device and perform data processing. The memory 130 may further store parking lot information and the parking space information provided in this embodiment of this application.

A wireless communication function of the terminal device may be implemented through the antenna 1, the antenna 2, the mobile communication module 140, the wireless communication module 150, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 140 may provide a wireless communication solution that is applied to the terminal device and that includes 2G, 3G, 4G, 5G, and the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering and amplification on the received electromagnetic wave, and transmit the electromagnetic wave to the modem processor for demodulation. The mobile communication module 140 may further amplify a signal modulated by the modem processor, and convert the signal into an electromagnetic wave through the antenna 1 for radiation. In some embodiments, at least some function modules of the mobile communication module 140 may be disposed in the processor 110. In some embodiments, at least some function modules of the mobile communication module 140 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the demodulated low-frequency baseband signal to the baseband processor for processing. The low-frequency baseband signal is processed by the baseband processor and then transmitted to the application processor. The application processor outputs a sound signal by using an audio device (not limited to the speaker 161), or displays an image or a video through the display unit 190. In some embodiments, the modem processor may be an independent component. In some other embodiments, the modem processor may be independent of the processor 110, and is disposed in a same device as the mobile communication module 140 or another function module.

The wireless communication module 150 may provide a wireless communication solution that is applied to the terminal device and that includes a wireless local area network (wireless local area networks, WLAN) (for example, wireless fidelity (wireless fidelity, Wi-Fi) Network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology, or the like. The wireless communication module 150 may be one or more components integrating at least one communication processor module. The wireless communication module 150 receives an electromagnetic wave through the antenna 2, performs frequency modulation and filtering processing on the electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 2.

In some embodiments, in the terminal device, the antenna 1 and the mobile communication module 140 are coupled, and the antenna 2 and the wireless communication module 150 are coupled. In this way, the terminal device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The terminal device may implement an audio function such as music playing, a voice call, and voice control through the audio frequency circuit 160, the speaker 161, the microphone 162, the application processor, and the like.

The audio frequency circuit 160 is configured to convert digital audio information into an analog audio signal output, and is further configured to convert an analog audio input into a digital audio signal. The audio frequency circuit 160 may be further configured to code and decode an audio signal. In some embodiments, the audio frequency circuit 160 may be disposed in the processor 110, or some function modules in the audio frequency circuit 160 are disposed in the processor 110.

The speaker 161, also referred to as a "horn", is configured to convert an audio electrical signal into a sound signal. The terminal device may listen to music or listen to a voice prompt by using the speaker 161. For example, the terminal device may prompt, by using the speaker 161, a user of a first vehicle that a first parking lot is congested and whether to change a destination to a second parking lot.

The microphone 162, also referred to as a "mike" or a "mic", is configured to convert a sound signal into an electrical signal. When voice information is sent or a voice instruction occurs, the user may make a sound by moving a human mouth close to the microphone 162, to input a sound signal to the microphone 162.

The distance sensor 171 is configured to measure a distance. The terminal device may measure a distance through infrared or laser. In some embodiments, the terminal device may use the distance sensor 171 to measure a distance to achieve fast focusing.

The barometric pressure sensor 172 is configured to measure barometric pressure. In some embodiments, the terminal device calculates an altitude by using a barometric pressure value measured by the barometric pressure sensor 172, to assist in positioning and navigation.

The display unit 190 may be configured to receive input digit or character information, and generate a signal input related to user setting and function control of the terminal device. Specifically, the display unit 190 may include a touchscreen 191, and may collect a touch operation performed by a user on or near the touchscreen 191, for example, tapping a button or dragging a scroll box. In some embodiments, the touchscreen 191 may receive an operation input by the user that the user chooses to change the destination to the second parking lot. In some other embodiments, the touchscreen 191 may further receive an operation input by the user that the user chooses not to change the destination to the second parking lot.

The display unit 190 may be further configured to display information input by the user or information provided for the user, and various menus of the terminal device. Specifically, the display unit 190 may include a display 192. The display 192 is configured to present an interface, to implement human-computer interaction. The display 192 may be configured in a form of a liquid crystal display, a light emitting diode, or the like. In some embodiments, the display 192 may display a navigation route. In some other embodiments, the display 192 may further display a prompt option. The prompt option may be used to prompt the user that the first parking lot is congested and whether to change the destination to the second parking lot.

The touchscreen 191 may cover the display 192, or the touchscreen 191 may be integrated with the display 192 to implement input and output functions of the terminal device. After integration, the touchscreen 191 and the display 192 may be referred to as a touch display for short.

The following uses a vehicle-mounted terminal applied to the first vehicle as an example. One or more of the following apparatuses in the vehicle-mounted terminal may be configured to perform related procedures of parking information transmission methods provided in embodiments of this application, for example, a telematics box (telematics box, T-Box) or an intelligent cockpit domain controller (cockpit domain controller, CDC).

The T-box is configured to communicate with the server, for example, report and deliver congestion information of the parking lot, and update and receive the parking lot information. The CDC is configured to provide a user interface for information interaction with the user. For example, when the user needs to travel, the CDC may pop up an indication on the user interface, to indicate the user to input a travel destination on the user interface. For another example, in a driving process of the vehicle, the CDC may update, on the user interface in real time, a current location of the vehicle and a road condition on a driving path, for example, a congestion status, a non-passing status, and a road repair status.

### Embodiment 1

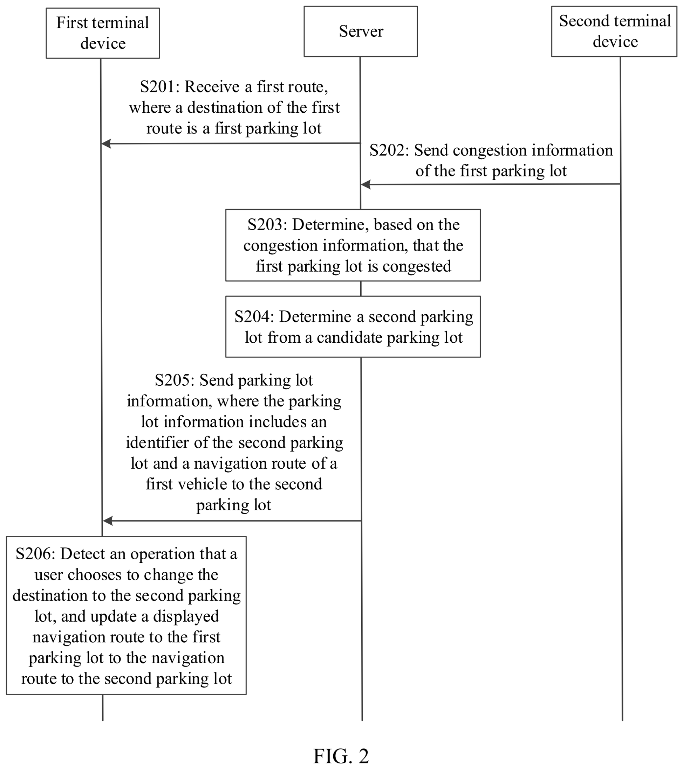

FIG. 2 is a schematic flowchart of a possible parking information transmission method according to an embodiment of this application. S201 and S206 in the flowchart may be performed by a terminal device, or may be performed by a chip or a chip system in the terminal device. The following uses a first terminal device as an example. The first terminal device is located in a first vehicle, and a destination of the first vehicle is a first parking lot.

S201: The first terminal device receives a first route from a server, where a destination of the first route is the first parking lot.

In a possible implementation, the first terminal device may send destination information to the server. The destination information indicates that the destination of the first vehicle is the first parking lot. After receiving the destination information from the first terminal device, the server may plan, for the first vehicle based on the destination information, the first route for driving from a current location of the first vehicle to the first parking lot.

In an example, the first terminal device may send a navigation request to the server. The navigation request carries destination information. The destination information indicates that the destination of the first vehicle is the first parking lot. After receiving the navigation request, the server may plan, for the first vehicle based on the destination information in the navigation request, the first route for driving from the current location of the first vehicle to the first parking lot. For example, the navigation information may further carry identification information of the first terminal device, and the identification information uniquely identifies the first terminal device. In this way, the server may send the first route to the first terminal device.

For example, the first terminal device is a vehicle-mounted terminal of a vehicle a. A destination of the vehicle a is a parking lot a, in other words, the first parking lot is the parking lot a. A T-Box of the vehicle a sends a navigation request to the server. The navigation request carries a vehicle identifier and destination information indicating that the destination of the vehicle a is the parking lot a. The vehicle identifier may be a license plate number, a vehicle identification number (vehicle identification number, VIN), a vehicle network address, a vehicle sequence number assigned during registration with the server, or the like of the first vehicle. After receiving the navigation request, the server plans, based on the destination information carried in the navigation request, a first route to the parking lot a for the vehicle a, and sends the first route to the T-Box of the vehicle a based on the vehicle identifier carried in the navigation request.

For another example, the first terminal device is a mobile phone of a user of a vehicle a, and a destination of the vehicle a is a parking lot. The mobile phone of the user of the vehicle a may send a navigation request to the server. The navigation request includes destination information and a terminal device sequence number. The destination information indicates that the destination of the vehicle a is the parking lot a. After receiving the navigation request sent by the mobile phone, the server may plan, for the vehicle a based on the destination information and the terminal device sequence number in the navigation request, a first route for driving from a current location of the vehicle a to the parking lot a, and send the first route to the mobile phone of the vehicle a.

S202: A second terminal device sends congestion information of the first parking lot to the server.

It should be noted that, in this embodiment of this application, a sequence of performing S201 and S202 is not limited. For example, S20S may be performed after S201, or S202 may be performed after S201.

The second terminal device is used as an example. The second terminal device is applied to a second vehicle. The second terminal device is any one of N terminal devices. The N terminal devices may all send congestion information of the first parking lot to the server when the first parking lot is congested.

In a possible implementation, the second terminal device may be a terminal device of a vehicle passing through the first parking lot. For example, the second terminal device is a terminal device of a vehicle whose destination is not the first parking lot but whose second distance from the first parking lot is less than or equal to a second threshold. Specifically, the second terminal device may determine, in the following two implementations, whether the first parking lot is congested.

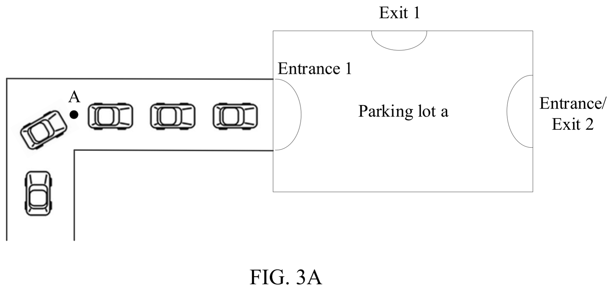

In a first possible implementation, the second terminal device may detect an average travel speed of the second terminal device, to determine whether the first parking lot is congested. In an example, the average travel speed may be an average travel speed from a specified location to an entrance of the parking lot. For example, when the average travel speed at which the second terminal device reaches an entrance of the first parking lot from a first location is less than a first speed threshold, the second terminal device determines that the first parking lot is congested, where a distance between the first location and the entrance of the first parking lot is a second length. For example, the second terminal device is a terminal device of a vehicle b. A destination of the vehicle b is a parking lot b. Refer to FIG. 3A. The first location is a location A. The vehicle b passes through the parking lot a, and an average travel speed from the location A to an entrance 1 of the parking lot a is less than a first threshold of an average speed of 27 km/h. In this case, the terminal device of the vehicle b determines that the first parking lot is congested.

In another example, the average travel speed may alternatively be an average travel speed within specified duration after a specified location is reached. For example, when an average travel speed of the second terminal device within 30 seconds after the second terminal device arrives at the first location is less than a second speed threshold, the second terminal device determines that the first parking lot is congested.

In a second possible implementation, the second terminal device may detect an average travel speed of surrounding vehicles, to determine whether the first parking lot is congested. The second terminal device may detect, by using a camera and/or a radar installed on the second terminal device, whether at least one vehicle exists around the second vehicle. When the second terminal device detects, by using the camera and/or the radar, that at least one vehicle exists around a current location, the second terminal device may determine an average travel speed of the at least one vehicle by using the camera and/or the radar. For example, the average travel speed may be an average travel speed from a specified location to an entrance of the parking lot. When the average travel speed of the at least one vehicle is less than a first speed threshold, the second terminal device determines that the first parking lot is congested. For example, the second terminal device is a terminal device of a vehicle b. The terminal device of the vehicle b detects, by using the camera, that a vehicle e exists around the vehicle b. When an average travel speed of the vehicle e is less than the first vehicle speed threshold, the terminal device of the vehicle b determines that the parking lot a is congested.

In another example, the average travel speed may alternatively be an average travel speed within specified duration after a specified location is reached. When the average travel speed of the at least one vehicle is less than a second speed threshold, the second terminal device determines that the first parking lot is congested. For example, the second terminal device is still a terminal device of a vehicle b. The terminal device of the vehicle b detects, by using the camera and the radar, that a vehicle e and a vehicle f exist around the vehicle b. When average travel speeds of the vehicle e and the vehicle f are both less than a second vehicle speed threshold, the terminal device determines that the parking lot a is congested.

When determining that the first parking lot is congested, the second terminal device generates congestion information of the first parking lot. In an example, the congestion information may include a vehicle identifier, congestion information generation time, a parking lot identifier, and an average travel speed. The parking lot identifier may be global positioning system (global positioning system, GPS) coordinates of the parking lot, a sequence number assigned to the parking lot during registration with the server, or the like. In another example, when determining that the first parking lot is congested, the second terminal device may determine a third distance between a current location of the second terminal device and the first parking lot. In this way, when the second terminal device generates congestion information of the first parking lot, the congestion information may include a vehicle identifier, congestion information generation time, a parking lot identifier, and a congestion distance. The congestion distance is a distance between the second terminal device and the first parking lot when the second terminal device determines that the first parking lot is congested. For example, the congestion information may alternatively include a vehicle identifier, congestion information generation time, a parking lot identifier, a congestion distance, and an average travel speed.

The second terminal device may further receive a detection indication from the server. The detection indication indicates the second terminal device to detect a congestion status of the first parking lot. For example, when determining that the first parking lot is congested, the second terminal device may generate the congestion information of the first parking lot in the foregoing congestion determining manner. When determining that the first parking lot is not congested, the second terminal device may send, to the server, information indicating that the first parking lot is not congested.

In another possible implementation, the second terminal device may alternatively be a terminal device of a vehicle whose destination is the first parking lot. In a process in which a second vehicle enters the first parking lot and reaches a target parking space, for example, the second terminal device may further determine, based on an average travel speed of the second vehicle or a surrounding vehicle, whether the first parking lot is congested. In another example, when one or more of the following conditions are met, the second terminal device may further determine that the first parking lot is congested.

First duration in which the second vehicle reaches the entrance of the first parking lot from the first location exceeds a third threshold.

Second duration in which the second vehicle reaches a target parking space in the first parking lot from the entrance of the first parking lot exceeds a fourth threshold.

Third duration in which the second vehicle reaches the target parking space in the first parking lot from the first location exceeds a fifth threshold.

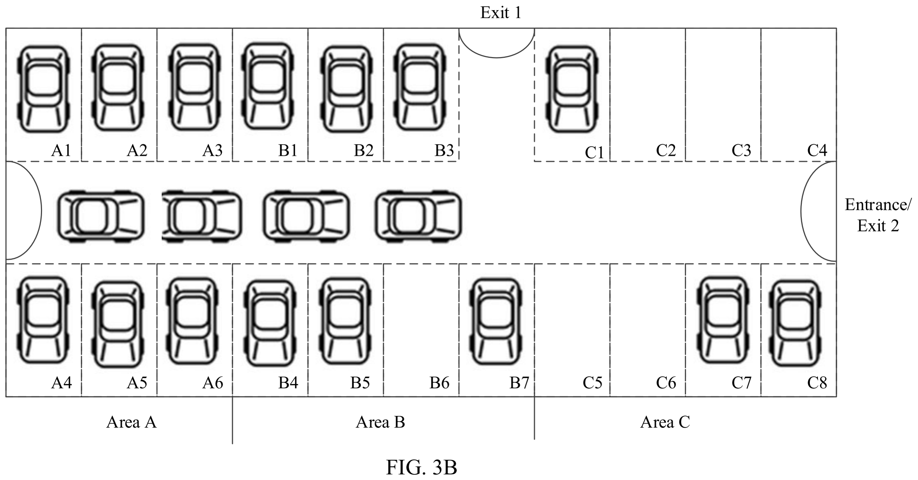

When determining that the first parking lot is congested, the second terminal device generates congestion information of the first parking lot. The congestion information includes at least a vehicle identifier, congestion information generation time, and a parking lot identifier, and includes any one or more of the first duration, the second duration, and the third duration. In a first example, if the second terminal device determines, when the condition 2 is met, that the first parking lot is congested, the congestion information may alternatively include a vehicle identifier, congestion information generation time, a parking lot identifier, and the first duration. In a second example, if the second terminal device determines, when the condition 3 is met, that the first parking lot is congested, the congestion information may include a vehicle identifier, congestion information generation time, a parking lot identifier, and the second duration. For a schematic diagram of congestion inside the parking lot, refer to FIG. 3B. In a third example, if the second terminal device determines, when the condition 4 is met, that the first parking lot is congested, the congestion information may include a vehicle identifier, congestion information generation time, a parking lot identifier, and the third duration.

After the congestion information of the first parking lot is generated, the second terminal device may send the congestion information of the first parking lot to the server based on a specified data format. In an example, the second terminal device may separately send the congestion information of the first parking lot to the server. In another example, the second terminal device may alternatively add the congestion information of the first parking lot to other information when sending the other information to the server.

In an example, when sending the congestion information of the first parking lot to the server, the second terminal device may immediately send, to the server, the congestion information after the congestion information is generated. In another example, the second vehicle may send the generated congestion information to the server after parking is completed.

S203: When determining, based on the congestion information, that the first parking lot is congested, the server updates a recommendation priority of the first parking lot. The congestion information may be reported by the N terminal devices when the first parking lot is congested. A difference between a moment at which the N terminal devices report the congestion information of the first parking lot and a moment at which the destination information is received is less than or equal to first preset duration.

After the server receives the congestion information sent by the N terminal devices, there may be the following several possible cases.

In a first possible case, N = 1, that is, the server receives congestion information reported by only one terminal device. The server determines confidence of the one terminal device based on a vehicle identifier included in the congestion information. The confidence of the terminal device indicates accuracy of congestion statuses of a plurality of parking lots that are historically reported by the one terminal device. The confidence of the terminal device may also be referred to as confidence of the vehicle. For example, the server may store and update a quantity of times that the terminal device reports the congestion status of the parking lot. In this way, using the first parking lot as an example, when the server receives simultaneously generated congestion information that is of the first parking lot and that is reported by a plurality of terminal devices, if a quantity of terminal devices that report congestion information indicating that the first parking lot is congested exceeds a preset quantity, the server add 1 to a quantity of faulty reporting times of a terminal device that reports congestion information of the first parking lot indicating that the first parking lot is not congested. Then, the server may obtain confidence of the terminal device based on a proportion of the quantity of faulty reporting times to a total quantity of reporting times of the congestion information.

When the confidence of the one terminal device is greater than or equal to a first confidence threshold, the server determines that the first parking lot is congested. Further, the server may update the recommendation priority of the first parking lot based on the congestion information reported by the one terminal device.

Example 1: The server configures a mapping relationship 1 between a recommendation priority and an average travel speed. If the congestion information reported by the one terminal device includes the average travel speed, the server may obtain, based on the mapping relationship 1 and the average travel speed, the recommendation priority corresponding to the average travel speed. Then, the server updates, based on the parking lot identifier included in the congestion information, the recommendation priority of the first parking lot corresponding to the parking lot identifier.

Example 2: The server configures a mapping relationship 2 between a recommendation priority and a congestion distance. If the congestion information reported by the one terminal device includes the congestion distance, the server may obtain, based on the mapping relationship 2 and the congestion distance, the recommendation priority corresponding to the congestion distance. Then, the server updates, based on the parking lot identifier included in the congestion information, the recommendation priority of the first parking lot corresponding to the parking lot identifier.

Example 3: The server configures a mapping relationship 3 between a recommendation priority of a parking lot and congestion duration. If the congestion information reported by the one terminal device includes the congestion duration, the server may obtain, based on the mapping relationship 3 and the congestion duration, the recommendation priority corresponding to the congestion duration. Then, the server updates, based on the parking lot identifier included in the congestion information, the recommendation priority of the first parking lot corresponding to the parking lot identifier.

In a second possible case, N > 1, and N is greater than or equal to a first preset quantity. In a possible implementation, the server may select, based on congestion information generation time included in the congestion information reported by the N terminal devices, latest generated congestion information from the congestion information reported by the N vehicles. The server determines, based on the latest generated congestion information, that the first parking lot is congested. Then, the server updates parking lot information of the first parking lot. Specifically, when updating the parking lot information of the first parking lot based on the latest generated congestion information, the server may update the recommendation priority of the first parking lot in the foregoing manner of updating the recommendation priority of the first parking lot.

In another possible implementation, if congestion information of the first parking lot that is reported by each of the N terminal devices indicates that the first parking lot is congested, the server may directly determine that the first parking lot is congested. Then, the server may update the recommendation priority of the first parking lot based on the congestion information reported by the N terminal devices.

For example, the server may average detection information included in the congestion information reported by the N terminal devices, to obtain an average value of the detection information, and then update the recommendation priority based on the average value of the detection information. The detection information may be any one or more of an average travel speed, congestion duration, and a congestion distance. For example, the detection information is the average travel speed. It is assumed that a value of N is 4, and values of average travel speeds in the detection information of four terminal devices are sequentially 10, 20, 30, and 40. The server averages the average travel speeds included in the congestion information reported by the four terminal devices, to obtain an average value 25 of the average travel speeds. Then, the server may determine, based on the mapping relationship 1 between the recommendation priority and the average travel speed, a recommendation priority corresponding to the average travel speed. The server updates, based on the parking lot identifier included in the congestion information, the recommendation priority of the first parking lot corresponding to the parking lot identifier.

In a third possible case, N > 1, and N is less than a first preset quantity.

The server determines confidence of the N terminal devices based on a vehicle identifier included in the congestion information. When determining that an average confidence value of the N terminal devices is greater than a third threshold, the server determines that the first parking lot is congested. Then, the server may update the recommendation priority of the first parking lot based on the congestion information reported by the N terminal devices. For example, the server performs weighted averaging on detection information included in the congestion information reported by the N terminal devices based on the confidence of the N terminal devices, to obtain a weighted average value of the detection information. The server updates the recommendation priority of the first parking lot based on the average value of the detection information.

In this embodiment of this application, the first terminal device may update the recommendation priority of the first parking lot in real time. In an example, when the recommendation priority of the first parking lot is updated, the server may send the updated recommendation priority of the first parking lot to the first terminal device. The first terminal device may display, in a user interface, the received recommendation priority of the first parking lot that is sent by the server. In another example, the server may periodically deliver the recommendation priority of the first parking lot to the first terminal device based on a set delivery frequency. The delivery frequency may be set by the user, or may be a default frequency configured in the server. In still another example, the server may send the recommendation priority of the first parking lot to the first terminal device based on a condition preset by the user, for example, a congestion delay of data transmission is less than a specified delay threshold.

In this embodiment of this application, when receiving a parking lot query request sent by a third terminal device, the server may further send the updated recommendation priority to the third terminal device. The third terminal device is a terminal device whose destination is not the first parking lot.

S204: The server determines a second parking lot from a candidate parking lot. The candidate parking lot is a parking lot whose distance from the first parking lot is less than a set distance threshold.

In an example, the server may directly select the second parking lot from the candidate parking lot. For example, the server may determine the second parking lot from the candidate parking lot based on a travel condition preset by the user. For example, the travel condition preset by the user is that time required for travel is shortest. The time required for travel includes vehicle travel time, user walking time, and congestion duration of the parking lot. For example, the first parking lot is the parking lot a. Parking lots whose distances from the parking lot a are less than a specified distance threshold of 500 meters include a parking lot b, a parking lot c, and a parking lot d. In other words, the candidate parking lot includes the parking lot b, the parking lot c, and the parking lot d. Time required for travel from a current location of the vehicle a to the parking lot b, the parking lot c, and the parking lot d is 10 minutes, 15 minutes, and 12 minutes respectively. The server determines, from the parking lot b, the parking lot c, and the parking lot d, that the second parking lot is the parking lot b to which time required to travel is shortest.

S205: The server sends parking lot information to the first terminal device. The parking lot information includes an identifier of the second parking lot and a navigation route of the first vehicle to the second parking lot.

After determining the second parking lot, the server may send the parking lot information to the first terminal device. The parking lot information includes the identifier of the second parking lot and the navigation route of the first vehicle to the second parking lot. In this way, after receiving the parking lot information from the server, the first terminal device may display a prompt option, to prompt the user of the first vehicle that the first parking lot is congested and whether to change the destination to the second parking lot.

S206: The first terminal device detects an operation that the user chooses to change the destination to the second parking lot, and updates a displayed navigation route to the first parking lot to the navigation route to the second parking lot.

When detecting the operation that the user chooses to change the destination to the second parking lot, the first terminal device may update the displayed navigation route to the first parking lot to the navigation route to the second parking lot. For example, the first terminal device is still the terminal device of the vehicle a. The destination of the vehicle a is the parking lot a. After determining that the second parking lot is the parking lot b, the server may send parking lot information to the vehicle a. The parking lot information includes an identifier of the parking lot b and a navigation route of the vehicle a to the parking lot b. In this way, after receiving the parking lot information of the parking lot b from the server, the terminal device of the vehicle a may display a prompt option, to prompt the user of the vehicle a that the parking lot a is congested and whether to change the destination to the parking lot b. When detecting the operation that the user chooses to change the destination to the parking lot b, the terminal device of the vehicle a may update the displayed navigation route to the parking lot a to the navigation route to the parking lot b.

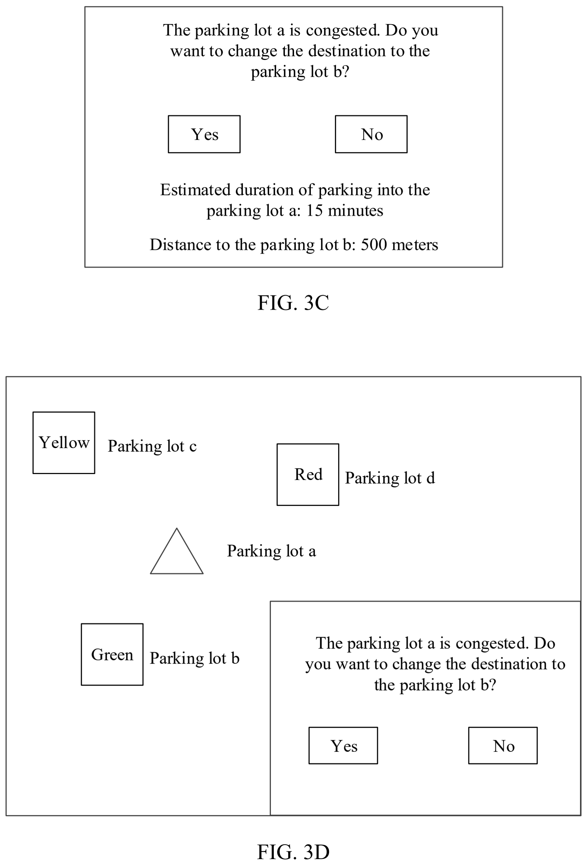

When the server sends the parking lot information to the first terminal device, the parking lot information may further include one or more of the following: first estimated duration from the entrance of the first parking lot to a parking space, second estimated duration from the current location of the first vehicle to the entrance of the first parking lot, third estimated duration from an entrance of the second parking lot to a parking space, fourth estimated duration from the current location of the first vehicle to the entrance of the second parking lot, a distance between the second parking lot and the first parking lot, a recommendation priority of the first parking lot and a recommendation priority of the second parking lot, and the like. In this way, when displaying the prompt option, the first terminal device may further display prompt information. The prompt information includes the parking lot information. For example, the terminal device is a vehicle-mounted terminal. Refer to FIG. 3C. When the prompt option is displayed in a CDC of the vehicle a, the prompt information is also displayed. The prompt information includes that estimated duration from a current location of the vehicle a to a parking space of the parking lot a is 15 minutes, and includes that a distance between the parking lot a and the parking lot b is 500 meters. For another example, the terminal device is still a vehicle-mounted terminal. As shown in FIG. 3D, when the prompt option is displayed in a CDC of the vehicle a, the prompt information is also displayed. The prompt information includes recommendation priorities of the parking lot b, the parking lot c, and the parking lot d, indicated in green, yellow, and red respectively. Green indicates recommended, yellow indicates ordinary, and red indicates not recommended.

If the first terminal device detects that the user chooses not to change the destination to the second parking lot, in other words, the destination of the first terminal device is still the first parking lot, For example, in a process in which the first vehicle enters the first parking lot, when determining that the first parking lot is congested, the first terminal device may report the congestion information of the first parking lot to the server in a same reporting manner as that of the second terminal device.

After the first terminal device reports the congestion information of the first parking lot to the server, the server may send a retransmission indication to the first terminal device when a problem such as packet loss or a duplicate packet occurs during data transmission of the first terminal device. For example, when receiving the retransmission indication from the server, the first terminal device may retransmit data based on a vehicle running status of the first vehicle. In an example, when the vehicle running status of the first vehicle indicates that the first vehicle has moved away from the first parking lot or the first vehicle has parked into the first parking lot, the first terminal device retransmits the congestion information of the first parking lot.

In another example, when the vehicle running status of the first vehicle indicates that the first vehicle has not entered the first parking lot or is driving in the first parking lot, the first terminal device may redetect information that indicates a road condition of the first parking lot, for example, any one or more of information such as the average travel speed from the first location to the entrance of the first parking lot, the first duration from the first location to the entrance of the first parking lot, the second duration from the entrance of the first parking lot to the target parking space in the first parking lot, and the third duration from the first location to the target parking space in the first parking lot. Then, the first terminal device sends the information to the server.

After reporting the congestion information of the first parking lot to the server, the first terminal device may further receive a detection indication from the server. The detection indication indicates the first vehicle to track the congestion status of the first parking lot. In a process in which the first vehicle arrives at the first parking lot, the first vehicle may periodically send, to the server, the information indicating the road condition of the first parking lot. For example, the first vehicle may send, to the server at intervals of specified duration, information indicating the road condition of the first parking lot.

### Embodiment 2

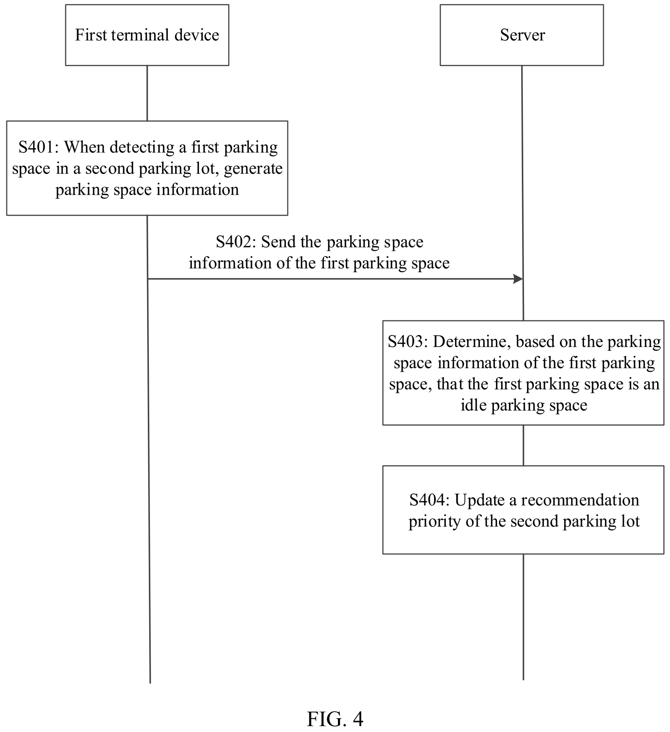

FIG. 4 is a schematic flowchart of a possible procedure for reporting parking space information according to an embodiment of this application. S401 and S402 in the procedure may be performed by a terminal device, or may be performed by a chip or a chip system in the terminal device. The following still uses a first terminal device located in a first vehicle as an example to describe in detail a procedure of reporting parking space information after the first vehicle enters a second parking lot.

After the first vehicle enters the second parking lot, the first terminal device may report parking space information to a server by using a parking space information reporting method shown in S401 to S404.

S401: When detecting a first parking space in the second parking lot, the first terminal device generates parking space information of the first parking space.

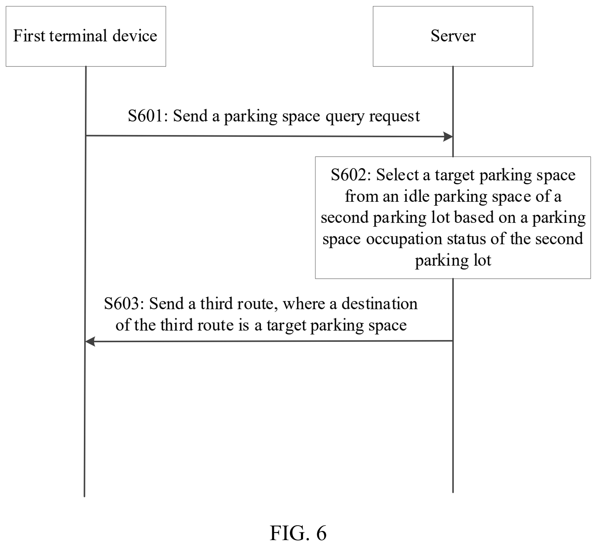

The first parking space is used as an example. The first parking space is any parking space in the second parking lot. The parking space information of the first parking space may include any one or more of a parking space identifier, a parking space type, a parking space location, confidence, a vehicle driving path, detection time, and reporting time of the first parking space. The parking space type may include a common parking space, a mini parking space, a disabled parking space, a stereoscopic parking space, a temporary parking space, and the like. The parking space location may be indicated by using parking space location coordinates (for example, longitude and latitude coordinates), or may be indicated by using a parking space number based on a high-precision map. The vehicle driving path is a driving route of the first vehicle from an entrance of the second parking lot to a current location. For example, as shown in FIG. 6, a driving route of a vehicle a is a route 1.

The confidence of the first parking space indicates a probability that the first parking space is an idle parking space. The confidence may also be referred to as idle parking space confidence or a parking space detection accuracy rate. The confidence of the idle parking space is related to hardware configuration of a detecting vehicle. In an example, a plurality of sensors are configured for the first terminal device to jointly detect whether the first parking space is an idle parking space. For example, a millimeter-wave radar and a camera are configured for a terminal device of the vehicle a, and a laser radar, a millimeter-wave radar, and a camera are configured for a terminal device of a vehicle b. Therefore, confidence of the first parking space reported by the terminal device of the vehicle b is greater than confidence of the first parking space reported by the terminal device of the vehicle a. In another example, only one sensor is configured for the first terminal device, to detect whether the first parking space is an idle parking space. For example, the first terminal device may determine the confidence of the idle parking space based on a type of the sensor. For example, only a millimeter-wave radar is configured for a terminal device of a vehicle c, therefore the confidence of the first parking space reported by the terminal device of the vehicle c is 70%. It can be learned that more types of sensors configured on the terminal device indicate better performance and greater confidence of the parking space. For example, the confidence of the first parking space reported by the vehicle c configured with only the millimeter-wave radar is less than the confidence of the first parking space reported by the vehicle a configured with both the millimeter-wave radar and the camera, and the confidence of the idle parking space of the vehicle b configured with the laser radar, the millimeter-wave radar, and the camera is greater than the confidence of both the vehicle a and the vehicle c.

The confidence of the idle parking space may further be related to detection duration of detecting the parking space by the first terminal device. Longer detection duration of the first parking space by the terminal device indicates greater confidence of the parking space. In this embodiment of this application, each terminal device may provide comprehensive confidence of the idle parking space based on information such as hardware configuration and detection duration of the terminal device, and report the idle parking space confidence to the server.

S402: The first terminal device sends the parking space information of the first parking space to the server.

The first terminal device may periodically report the parking space information of the first parking space after detecting the first parking space. When the first terminal device sends the parking space information of the first parking space in the second parking lot, if the first terminal device fails to send the parking space information of the first parking space due to a poor network condition and the like, the first terminal device may further send the parking space information of the first parking space to the server when duration of driving out of the second parking lot reaches specified duration.

In a possible implementation, the server may learn of a current location of each terminal device in real time. In this way, after receiving the parking space information of the first parking space from the first terminal device, when determining that the idle parking space confidence carried in the parking space information of the first parking space is less than a preset threshold, the server may send a detection indication to another terminal device around the first terminal device, to indicate the another terminal device to feed back parking space information of the first parking space. This can ensure authenticity and reliability of data.

S403: The server determines based on the parking space information of the first parking space, that the first parking space is an idle parking space.

The server determines based on parking space information of the first parking space reported by M terminal devices, that the first parking space is the idle parking space. Each of the M terminal devices may report the parking space information of the first parking space when detecting the first parking space after the vehicle enters the second parking lot. A difference between a moment at which the M terminal devices report the parking space information of the first parking space and a moment at which the first vehicle enters the second parking lot is less than or equal to second preset duration.

In a possible implementation, after the server receives the parking space information sent by the M terminal devices, there may be the following several possible cases.

In a first possible case, only one terminal device reports parking space information. The server may determine, based on the idle parking space confidence included in the parking space information of the first parking space reported by the one terminal device, whether the first parking space is idle. For example, when the idle parking space confidence is greater than or equal to a second confidence threshold, the server determines that the first parking space is idle.

In a second possible case, M > 1. If the parking space idle confidence included in the parking space information of the first parking space reported by the M terminal devices indicates that the first parking space is idle, and M is greater than or equal to a second preset quantity, the server determines that the first parking space is idle. If M is less than the second preset quantity, when determining that an average value of the confidence of the first parking space reported by the M terminal devices is greater than a third threshold, the server determines that the first parking space is an idle parking space.

In another possible implementation, the server may determine, based on detection time carried in the parking space information of the first parking space reported by the M terminal devices, latest detected parking space information of the first parking space. Then, the server determines, based on idle parking space confidence included in the latest detected parking space information of the first parking space, whether the first parking space is idle.

S404: The server updates a recommendation priority of the second parking lot.

For example, the server configures a mapping relationship 4 between a parking space idle rate of a parking lot and a recommendation priority. After determining that the first parking space is an idle parking space, the server updates a parking space occupation status of the second parking lot, to determine a parking space idle rate of the second parking lot. The parking space idle rate indicates a proportion of an idle parking space in the second parking lot. The server updates the recommendation priority of the second parking lot based on the parking space idle rate of the second parking lot and the mapping relationship 4. For example, the server determines, based on the updated parking space information, that the parking space idle rate of the second parking lot is 90%. In the mapping relationship 4, the parking space idle rate 90% corresponds to a recommendation priority level 1. The server updates the recommendation priority of the second parking lot to the level 1 based on the mapping relationship 4 and the parking space idle rate of the second parking lot.

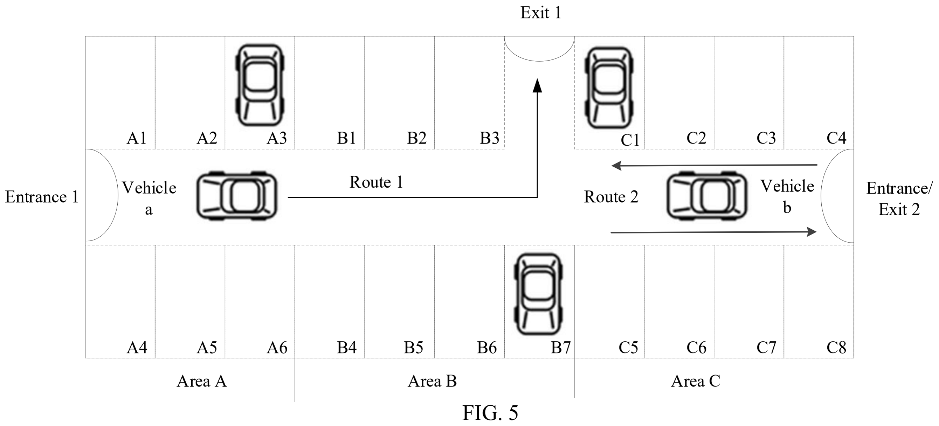

Further, the server may further recommend a target parking space to the first terminal device based on the updated parking space information. In a first example, the server may determine the recommended target parking space based on the updated parking space information and the current location. For example, the vehicle a enters the parking lot a, and the first terminal device is the terminal device of the vehicle a. Refer to FIG. 5. A current location of the vehicle a is near a parking space A2. The server determines, based on updated parking space information and the current location, that the recommended target parking space is the parking space A2, and then recommends the parking space A2 to the terminal device of the vehicle a.

In a second example, the server may further recommend the target parking space to the first terminal device based on the updated parking space information and a destination location. For example, the vehicle b enters the parking lot a, and the first terminal device is the terminal device of the vehicle b. Refer to FIG. 5. A destination location of the vehicle b is near an entrance/exit 2. The server determines, based on updated parking space information and the destination location of the vehicle b, that the recommended target parking space is a parking space C4, and then recommends the parking space C4 to the terminal device of the vehicle b.

In a third example, the server may further recommend the target parking space to the first terminal device based on updated parking space information and the parking space occupation status of the second parking lot. For example, as shown in FIG. 5, the first terminal device is still the terminal device of the vehicle b. The parking space occupation status of the second parking lot indicates that there are plenty of idle parking spaces. The server determines, based on updated parking space information and the parking space occupation status of the second parking lot, that the recommended target parking space is a parking space C5, and then recommends the parking space C5 to the vehicle b.

In a fourth example, the server may further recommend the target parking space to the first terminal device based on the updated parking space information and a driver status. The driver status may be set by a user, and the first terminal device may report the driver status to the server when allowed by the user. For example, as shown in FIG. 5, the first terminal device is still the terminal device of the vehicle a. A driver status of the vehicle a is a novice driver, and a parking space A6 is an independent parking space. The server determines, based on the updated parking space information and the driver status, that the recommended target parking space is the parking space A6, and then recommends the parking space A6 to the terminal device of the vehicle a.

In this embodiment of this application, when determining that the first parking space changes from an occupied parking space to an idle parking space, the server may deliver the parking space information of the first parking space to the first terminal device. In another possible implementation, the server may periodically send the parking space occupation status of the second parking lot to the first terminal device based on a specified delivery frequency. The delivery frequency may be set by the user, or may be a default frequency configured in the server. In another possible implementation, the server may send the recommendation priority of the second parking lot to the first terminal device based on a condition preset by the user, for example, the parking space occupation status of the second parking lot changes.

### Embodiment 3

FIG. 6 is a schematic flowchart of a possible parking information transmission method according to an embodiment of this application. S601 in the flowchart may be performed by a terminal device, or may be performed by a chip or a chip system in the terminal device. The following still uses a first terminal device located in a first vehicle as an example to describe a process in which the first vehicle parks into a second parking lot after S205.

S601: The first terminal device sends a parking space query request to a server. The parking space query request may carry a parking lot identifier of the second parking lot. In this way, when receiving the parking space query request from the first terminal device, the server may obtain a parking space occupation status of the second parking lot based on the parking lot identifier of the second parking lot carried in the parking space query request. The parking space occupation status may be determined by the server in real time based on parking space information of any parking space that is reported by the terminal device when the terminal device detects the any parking space in the second parking lot.

S602: The server selects a target parking space from an idle parking space of the second parking lot based on the parking space occupation status of the second parking lot.

In a possible implementation, the server may send a parking space identifier of the idle parking space to the first terminal device. The first vehicle selects a parking space from the idle parking space as the target parking space. When detecting an operation of selecting the target parking space by a user, the first terminal device sends a parking space identifier of the target parking space selected by the user to the server. The server receives the parking space identifier from the first terminal device, uses the parking space corresponding to the parking space identifier as the target parking space, and then plans a third route from a current location to the target parking space for the first vehicle.

S603: The server sends the third route to the first terminal device, where a destination of the third route is the target parking space.

In another possible implementation, the server may directly select one parking space from the idle parking space of the second parking lot as the target parking space based on a user setting. In an example, the server may send, to the first terminal device, a parking space identifier of the selected target parking space and the third route for the first vehicle to drive to the target parking space. The first terminal device receives the parking space identifier and the navigation route from the server, and displays information prompting a user of the first vehicle whether to drive to the target parking space. When detecting that the user chooses to drive to the target parking space, the first terminal device displays the navigation route of the first vehicle to drive to the target parking space. For example, the user setting may be to select a parking space closest to the current vehicle location.

Further, after the first vehicle enters the second parking lot, S401 to S404 may be performed to detect the parking space in the second parking lot and report the parking space information.

### Embodiment 4

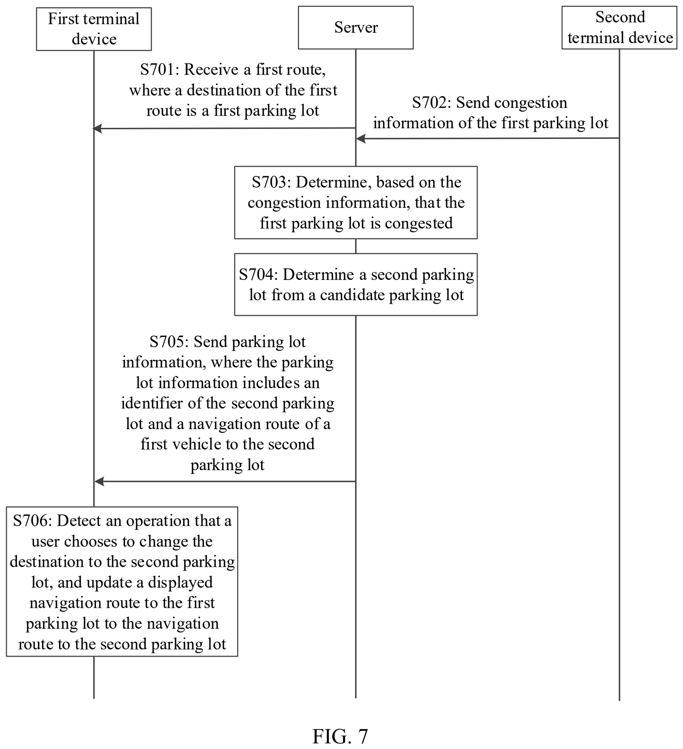

FIG. 7 is a schematic flowchart of a possible parking information transmission method according to an embodiment of this application. Procedure S701, S702, and S706 may be performed by a terminal device, or may be performed by a chip or a chip system in the terminal device. The following still uses a first terminal device located in a first vehicle as an example to describe a process in which a destination of the first vehicle is switched from a first parking lot to a second parking lot.

S701: For details, refer to S201. Details are not described again.

S702: For details, refer to S202. Details are not described again.

S703: For details, refer to S203. Details are not described again.

S704: When determining, based on congestion information of the first parking lot reported by a second terminal device, that the first parking lot is congested, a server updates congestion duration of the first parking lot.

After the server receives congestion information sent by N vehicles, there may be the following possible cases.

In a first possible case, N = 1, that is, the server receives congestion information reported by only one terminal device. The server determines first confidence of the one terminal devices based on a vehicle identifier included in the congestion information. When the first confidence of the one terminal device is greater than or equal to a first confidence threshold, the server determines that the first parking lot is congested. Further, the server may update the congestion duration of the first parking lot based on the congestion information reported by the one terminal device.

Example 1: The server configures a mapping relationship 5 between the congestion duration and an average travel speed. If the congestion information reported by the one terminal device includes the average travel speed, the server may obtain, based on the mapping relationship 5 and the average travel speed, congestion duration corresponding to the average travel speed. Then, the server updates, based on a parking lot identifier included in the congestion information, the congestion duration of the first parking lot corresponding to the parking lot identifier.

Example 2: The server configures a mapping relationship 6 between the congestion duration and a congestion distance. If the congestion information reported by the one terminal device includes the congestion distance, the server may obtain, based on the mapping relationship 6 and the congestion distance, congestion duration corresponding to the congestion distance. The server updates, based on a parking lot identifier included in the congestion information, the congestion duration of the first parking lot corresponding to the parking lot identifier.

Example 3: If the congestion information reported by the one terminal device includes the congestion duration, the server updates, based on a parking lot identifier included in the congestion information, the congestion duration of the first parking lot corresponding to the parking lot identifier.

In a second possible case, N > 1, and N is greater than or equal to a first preset quantity. In a possible implementation, the server may select, based on congestion information generation time included in the congestion information reported by N terminal devices, latest generated congestion information from the congestion information reported by the N terminal devices. The server determines, based on the latest generated congestion information, that the first parking lot is congested. Then, the server may update the congestion duration of the first parking lot in the foregoing manner of updating the congestion duration of the first parking lot.

In another possible implementation, if congestion information of the first parking lot that is reported by each of the N terminal devices indicates that the first parking lot is congested, the server may directly determine that the first parking lot is congested. Then, the server may update the congestion duration of the first parking lot based on the congestion information reported by the N terminal devices.

For example, the server may average detection information included in the congestion information reported by the N terminal devices, to obtain an average value of the detection information, and then update parking lot information based on the average value of the detection information. The detection information may be any one or more of an average travel speed, congestion duration, and a congestion distance. For example, the detection information is the average travel speed. It is assumed that a value of N is 4, and values of average travel speeds in the detection information of four terminal devices are sequentially 10, 20, 30, and 40. The server averages the average travel speeds included in the congestion information reported by the four terminal devices, to obtain an average value 25 of the average travel speeds. Then, the server may determine, based on the mapping relationship 5, congestion duration corresponding to the average travel speed. The server updates, based on a parking lot identifier included in the congestion information, congestion duration of a parking lot a corresponding to the parking lot identifier.

In a third possible case, N > 1, and N is less than a first preset quantity. The server determines first confidence of the N terminal devices based on a vehicle identifier included in the congestion information. When determining that an average confidence value of the N terminal devices is greater than a third threshold, the server determines that the first parking lot is congested. Then, the server may update the congestion duration of the first parking lot based on the congestion information reported by the N terminal devices. For example, the server performs weighted averaging on detection information included in the congestion information reported by the N terminal devices based on the confidence of the N terminal devices, to obtain a weighted average value of the detection information. Further, the server updates the congestion duration of the first parking lot based on the average value of the detection information.

In this embodiment of this application, the first terminal device may update the congestion duration of the first parking lot in real time. In an example, when the recommendation priority of the first parking lot is updated, the server may send the congestion duration of the first parking lot to the first terminal device. The first vehicle may display, in a user interface, the received congestion duration of the first parking lot that is sent by the server. In another example, the server may periodically deliver the congestion duration of the first parking lot to the first terminal device based on a set delivery frequency. The delivery frequency may be set by the user, or may be a default frequency configured in the server. In still another example, the server may send the congestion duration of the first parking lot to the first terminal device based on a condition preset by the user, that is, a congestion delay of data transmission is less than a specified delay threshold.

In this embodiment of this application, when receiving a parking lot query request sent by a third terminal device, the server may further send the updated congestion duration to the third terminal device. The third terminal device is a terminal device whose destination is not the first parking lot.

S705: For details, refer to S205. Details are not described again.

S706: For details, refer to S206. Details are not described again.

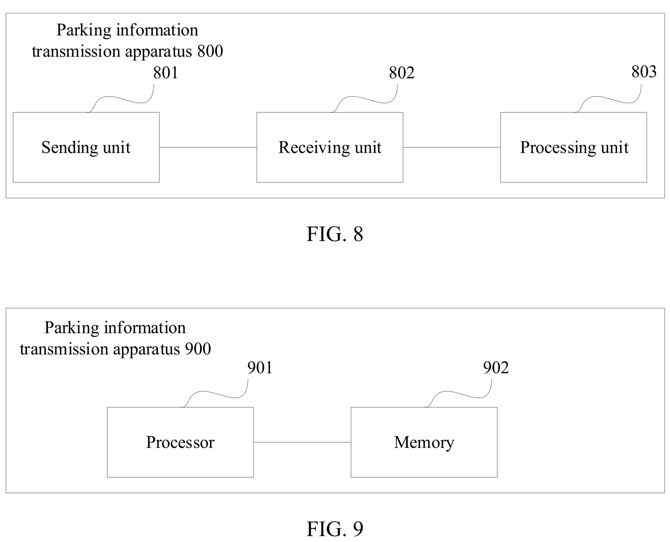

Based on the foregoing embodiments, refer to FIG. 8. An embodiment of this application provides a parking information transmission apparatus 800, configured to implement the parking information transmission methods provided in embodiments of this application.

In a possible application scenario, when the apparatus is applied to a terminal device, the apparatus includes a sending unit 801, a receiving unit 802, and a processing unit 803. In an example, the sending unit 801 and the receiving unit 802 may be but are not limited to being implemented by using the mobile communication module 140 and the wireless communication module 150 in FIG. 1B. The processing unit 803 may be implemented by using the processor 110 in FIG. 1B. For specific structures and functions of the mobile communication module 140, the wireless communication module 150, and the processor 110, refer to the descriptions of FIG. 2. In another example, the sending unit 801 and the receiving unit 802 may alternatively be implemented by using a T-box, and the processing unit 803 may be implemented by using a CDC.

Specifically, the sending unit 801 may send destination information to a server, where the destination information indicates that a destination of a first vehicle is a first parking lot.

The receiving unit 802 may receive parking lot information from the server on a driving path of the first vehicle to the first parking lot. The parking lot information includes an identifier of a second parking lot and a navigation route of the first vehicle to the second parking lot.

The processing unit 803 may display a prompt option. The prompt option is used to prompt a user of the first vehicle that the first parking lot is congested and whether to change the destination to the second parking lot. When detecting an operation that a user chooses to change the destination to the second parking lot, the processing unit 803 may update a displayed navigation route to the first parking lot to the navigation route to the second parking lot, where a first distance between the second parking lot and the first parking lot is not greater than a first threshold.

In a possible design, the receiving unit 802 may receive the parking lot information from the server. The parking lot information includes one or more of the following:
first estimated duration from an entrance of the first parking lot to a parking space;
second estimated duration from a current location of the first vehicle to the entrance of the first parking lot;
third estimated duration from an entrance of the second parking lot to a parking space;
fourth estimated duration from the current location of the first vehicle to the entrance of the second parking lot; and
a distance between the second parking lot and the first parking lot.

When displaying the prompt option, the processing unit 803 may further display prompt information. The prompt information includes the parking lot information.

In a possible design, the processing unit 803 may further send congestion status information of the first parking lot to the server when detecting an operation that the user chooses not to change the destination to the second parking lot and determining that the first parking lot is congested.

In a possible design, when determining that the first parking lot is congested, the processing unit 803 is specifically configured to:
when one or more of the following conditions 1 to 4 are met, determine that the first parking lot is congested.

Condition 1: An average travel speed at which the first vehicle reaches the entrance of the first parking lot from a first location is less than a first speed threshold, where a distance between the first location and the entrance of the first parking lot is a second length.

Condition 2: First duration in which the first vehicle reaches the entrance of the first parking lot from the first location exceeds a third threshold.

Condition 3: Second duration in which the first vehicle reaches a target parking space in the first parking lot from the entrance of the first parking lot exceeds a fourth threshold.

Condition 4: Third duration in which the first vehicle reaches the target parking space in the first parking lot from the first location exceeds a fifth threshold.

In a possible design, after the sending unit 801 sends the congestion status information of the first parking lot to the server, the receiving unit 802 may further receive a detection indication from the server. The detection indication indicates the first vehicle to track the congestion status of the first parking lot.

The sending unit 801 may send, to the server at intervals of specified duration, information indicating a road condition of the first parking lot in a process in which the first vehicle arrives at the first parking lot.

In a possible design, when the first vehicle enters the second parking lot, the receiving unit 802 may further receive a third route planned by the server. A destination of the third route is a target parking space in the second parking lot.

The processing unit 803 may further drive to the target parking space based on the third route.

In a possible design, the sending unit 801 may further send parking space information of the first parking space to the server when a first parking space is detected in a process of driving to the target parking space based on the third route. The parking space information of the first parking space includes one or more of a parking space location, a parking space identifier, confidence, or detection time of the first parking space. The confidence indicates a probability that the first parking space is an idle parking space.

In another possible application scenario, the apparatus is applied to the server, and the apparatus may further include only the sending unit 801 and the receiving unit 802.

Specifically, the receiving unit 802 may receive destination information sent by the first vehicle. The destination information indicates that a destination of the first vehicle is the first parking lot.

The sending unit 801 may send, to the first vehicle, parking lot information that describes a recommended parking lot, when determining, based on statistical data, that the first parking lot is congested.

The statistical data includes at least congestion status information of the first parking lot that is reported by N vehicles when the first parking lot is congested. A difference between a moment at which the N vehicles report the congestion status information of the first parking lot and a moment at which the destination information is received is less than or equal to first preset duration.

The parking lot information includes an identifier of the second parking lot and the navigation route of the first vehicle to the second parking lot. A first distance between the second parking lot and the first parking lot is not greater than a first threshold.

In a possible design, the parking information transmission apparatus 800 further includes the processing unit 803. The N vehicles include only a second vehicle. Congestion status information of the first parking lot reported by the second vehicle indicates that the first parking lot is congested. The statistical data further includes confidence of the second vehicle. The confidence of the second vehicle indicates accuracy of congestion statuses of a plurality of parking lots that are historically reported by the second vehicle.

When determining, based on the statistical data, that the first parking lot is congested, the processing unit 803 is specifically configured to: when the confidence of the second vehicle is greater than or equal to a first confidence threshold, determine that the first parking lot is congested.

In a possible design, the parking information transmission apparatus 800 further includes the processing unit 803. N is greater than 1 and N is less than a first preset quantity. Congestion status information of the first parking lot reported by each of the N vehicles indicates that the first parking lot is congested. Confidence of the N vehicles indicates accuracy of congestion statuses of a plurality of parking lots that are historically reported by the N vehicles.

When determining, based on the statistical data, that the first parking lot is congested, the processing unit 803 is specifically configured to: when determining that an average value of the confidence of the N vehicles is greater than a third threshold, determine that the first parking lot is congested.

In a possible design, the sending unit 801 may further send a third route to the first vehicle when the first vehicle enters the second parking lot and the sending unit 801 determines, based on the statistical data, that a first parking space is an idle parking space. A destination of the third route is the first parking space.

The statistical data further includes parking space information of the first parking space that is reported by M vehicles when the M vehicles detect the first parking space in the second parking lot. The parking space information of the first parking space indicates whether the first parking space is an idle parking space. A difference between a moment at which the M vehicles report the parking space information of the first parking space and a moment at which the first vehicle enters the second parking lot is less than or equal to second preset duration.

In a possible design, the parking information transmission apparatus 800 further includes the processing unit 803. The M vehicles include only a third vehicle. Parking space information of the first parking space reported by the third vehicle includes confidence of the first parking space. The confidence of the first parking space indicates a probability that the first parking space is an idle parking space.

When determining that the first parking space is the idle parking space based on the statistical data, the processing unit 803 is specifically configured to: when the confidence of the first parking space is greater than or equal to a second confidence threshold, determine that the first parking space is the idle parking space.

In a possible design, the parking information transmission apparatus 800 further includes the processing unit 803. M is greater than 1 and less than a second preset quantity. The parking space information of the first parking space reported by the M vehicles includes confidence of the first parking space. The confidence of the first parking space indicates a probability that the first parking space is an idle parking space.

When determining that the first parking space is the idle parking space based on the statistical data, the processing unit 803 is specifically configured to: when determining that an average value of the confidence of the first parking space reported by the M vehicles is greater than a third threshold, determine that the first parking space is the idle parking space.

When the parking information transmission apparatus is a chip applied to the terminal device, the terminal device chip implements a function of the terminal device in the foregoing method embodiment. The chip of the terminal device receives information from another module (for example, a radio frequency module or an antenna) in the terminal device, where the information is sent by the server to the terminal device. Alternatively, the chip of the terminal device sends information to another module (for example, a radio frequency module or an antenna) in the terminal device, where the information is sent by the terminal device to the server.

As shown in FIG. 9, this application further provides a schematic diagram of a structure of a parking information transmission apparatus 900. The parking information transmission apparatus 900 may include a processor 901 and a memory 902. The memory 902 is configured to store instructions or a program executed by the processor 901, or store input data required for running the instructions or the program by the processor 901, or store data generated after the processor 901 runs the instructions or the program. In a possible application scenario, the processor 901 may be configured to perform all operations, except the sending operation, performed by the terminal device in any one of the embodiments shown in FIG. 2, FIG. 4, and FIG. 7, for example, S206 in FIG. 2, S401 in FIG. 4, and S706 in FIG. 7. In another possible application scenario, the processor 901 may perform all operations, except the sending operation, performed by the server in any one of the embodiments shown in FIG. 2, FIG. 4, FIG. 6, and FIG. 7, for example, S203 to S204 in FIG. 2, S403 to S404 in FIG. 4, S602 in FIG. 6, and S703 to S704 in FIG. 7.

It should be understood that the processor mentioned in embodiments of this application may be a central processing unit (central processing unit, CPU), or the processor may be another general-purpose processor, a digital signal processor (Digital Signal Processor, DSP), an application-specific integrated circuit (application specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal device. Certainly, the processor and the storage medium may exist in the terminal device as discrete components.

The foregoing descriptions about implementations allow a person skilled in the art to understand that, for the purpose of convenient and brief description, division of the foregoing function modules is taken as an example for illustration. In actual application, the foregoing functions can be assigned to different modules and implemented based on a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

Further embodiments of the present invention are provided in the following. It should be noted that the numbering used in the following section does not necessarily need to comply with the numbering used in the previous sections.
Embodiment 1. A parking information transmission method, applied to a first vehicle, wherein the method comprises:
   sending destination information to a server, wherein the destination information indicates that a destination of the first vehicle is a first parking lot;
   receiving parking lot information from the server on a driving path of the first vehicle to the first parking lot, wherein the parking lot information comprises an identifier of a second parking lot and a navigation route of the first vehicle to the second parking lot;
   displaying a prompt option, wherein the prompt option is used to prompt a user of the first vehicle that the first parking lot is congested and whether to change the destination to the second parking lot; and
   detecting an operation that the user chooses to change the destination to the second parking lot, and updating a displayed navigation route to the first parking lot to the navigation route to the second parking lot, wherein a first distance between the second parking lot and the first parking lot is not greater than a first threshold.
Embodiment 2. The method according to embodiment 1, further comprising:
   receiving parking lot information from the server, wherein the parking lot information comprises one or more of the following:
   first estimated duration from an entrance of the first parking lot to a parking space;
   second estimated duration from a current location of the first vehicle to the entrance of the first parking lot;
   third estimated duration from an entrance of the second parking lot to a parking space;
   fourth estimated duration from the current location of the first vehicle to the entrance of the second parking lot; and
   a distance between the second parking lot and the first parking lot; and
   when displaying the prompt option, displaying prompt information, wherein the prompt information comprises the parking lot information.
Embodiment 3. The method according to embodiment 1 or 2, further comprising:
   if an operation that the user chooses not to change the destination to the second parking lot is detected, when determining that the first parking lot is congested, sending congestion status information of the first parking lot to the server.
Embodiment 4. The method according to embodiment 3, wherein the determining that the first parking lot is congested comprises:
   when one or more of the following conditions 1 to 4 are met, determining that the first parking lot is congested:
   condition 1: an average travel speed at which the first vehicle reaches the entrance of the first parking lot from a first location is less than a first speed threshold, wherein a distance between the first location and the entrance of the first parking lot is a second length;
   condition 2: first duration in which the first vehicle reaches the entrance of the first parking lot from the first location exceeds a third threshold;
   condition 3: second duration in which the first vehicle reaches a target parking space in the first parking lot from the entrance of the first parking lot exceeds a fourth threshold; and
   condition 4: third duration in which the first vehicle reaches the target parking space in the first parking lot from the first location exceeds a fifth threshold.
Embodiment 5. The method according to embodiment 3 or 4, after the sending congestion status information of the first parking lot to the server, further comprising:
   receiving a detection indication from the server, wherein the detection indication indicates the first vehicle to track a congestion status of the first parking lot; and
   in a process in which the first vehicle arrives at the first parking lot, sending, to the server at intervals of specified duration, information indicating a road condition of the first parking lot.
Embodiment 6. The method according to any one of embodiments 1 to 5, further comprising:
   when the first vehicle enters the second parking lot, receiving a third route planned by the server, wherein a destination of the third route is a target parking space in the second parking lot; and
   driving to the target parking space based on the third route.
Embodiment 7. The method according to embodiment 6, further comprising:
   in a process of driving to the target parking space based on the third route, when a first parking space is detected, sending parking space information of the first parking space to the server, wherein the parking space information of the first parking space comprises one or more of a parking space location, a parking space identifier, confidence, or detection time of the first parking space, and the confidence indicates a probability that the first parking space is an idle parking space.
Embodiment 8. A parking information transmission method, wherein the method comprises:
   receiving, by a server, destination information sent by a first vehicle, wherein the destination information indicates that a destination of the first vehicle is a first parking lot; and
   when determining, by the server based on statistical data, that the first parking lot is congested, sending, to the first vehicle, parking lot information that describes a recommended parking lot, wherein
   the statistical data comprises at least congestion status information of the first parking lot that is reported by N vehicles when the first parking lot is congested, and a difference between a moment at which the N vehicles report the congestion status information of the first parking lot and a moment at which the destination information is received is less than or equal to first preset duration; and
   the parking lot information comprises an identifier of a second parking lot and a navigation route of the first vehicle to the second parking lot, and a first distance between the second parking lot and the first parking lot is not greater than a first threshold.
Embodiment 9. The method according to embodiment 8, wherein the N vehicles comprise only a second vehicle, congestion status information of the first parking lot reported by the second vehicle indicates that the first parking lot is congested, the statistical data further comprises confidence of the second vehicle, and the confidence of the second vehicle indicates accuracy of congestion statuses of a plurality of parking lots that are historically reported by the second vehicle; and
   the determining, by the server based on statistical data, that the first parking lot is congested comprises:
   when the confidence of the second vehicle is greater than or equal to a first confidence threshold, determining, by the server, that the first parking lot is congested.
Embodiment 10. The method according to embodiment 8, wherein N is greater than 1 and less than a first preset quantity, congestion status information of the first parking lot reported by each of the N vehicles indicates that the first parking lot is congested, confidence of the N vehicles indicates accuracy of congestion statuses of a plurality of parking lots that are historically reported by the N vehicles, and the determining, by the server based on statistical data, that the first parking lot is congested comprises:
   when determining that an average value of the confidence of the N vehicles is greater than a third threshold, determining, by the server, that the first parking lot is congested.
Embodiment 11. The method according to any one of embodiments 8 to 10, further comprising:
   when the first vehicle enters the second parking lot, sending, by the server, a third route to the first vehicle when determining, by the server based on the statistical data, that a first parking space is an idle parking space, wherein a destination of the third route is the first parking space, wherein
   the statistical data further comprises parking space information of the first parking space that is reported by M vehicles when the M vehicles detect the first parking space in the second parking lot, the parking space information of the first parking space indicates whether the first parking space is an idle parking space, and a difference between a moment at which the M vehicles report the parking space information of the first parking space and a moment at which the first vehicle enters the second parking lot is less than or equal to second preset duration.
Embodiment 12. The method according to embodiment 11, wherein the M vehicles comprise only a third vehicle, parking space information of the first parking space reported by the third vehicle comprises confidence of the first parking space, and the confidence of the first parking space indicates a probability that the first parking space is an idle parking space; and
   the determining, by the server based on the statistical data, that the first parking space is an idle parking space comprises:
   when the confidence of the first parking space is greater than or equal to a second confidence threshold, determining, by the server, that the first parking space is an idle parking space.
   Embodiment 13. The method according to embodiment 11, wherein M is greater than 1 and less than a second preset quantity, the parking space information of the first parking space reported by the M vehicles comprises confidence of the first parking space, and the confidence of the first parking space indicates a probability that the first parking space is an idle parking space; and
   the determining, by the server based on the statistical data, that the first parking space is an idle parking space comprises:
      when determining that an average value of the confidence of the first parking space reported by the M vehicles is greater than a third threshold, determining, by the server, that the first parking space is an idle parking space.
Embodiment 14. A parking information transmission apparatus, applied to a first vehicle and comprising:
   a sending unit, configured to send destination information to a server, wherein the destination information indicates that a destination of the first vehicle is a first parking lot;
   a receiving unit, configured to receive parking lot information from the server on a driving path of the first vehicle to the first parking lot, wherein the parking lot information comprises an identifier of a second parking lot and a navigation route of the first vehicle to the second parking lot; and
   a processing unit, configured to display a prompt option, wherein the prompt option is used to prompt a user of the first vehicle that the first parking lot is congested and whether to change the destination to the second parking lot; and configured to detect an operation that the user chooses to change the destination to the second parking lot, and update a displayed navigation route to the first parking lot to the navigation route to the second parking lot, wherein a first distance between the second parking lot and the first parking lot is not greater than a first threshold.
Embodiment 15. The apparatus according to embodiment 14, wherein
   when the receiving unit is configured to receive the parking lot information from the server, the parking lot information comprises one or more of the following:
   first estimated duration from an entrance of the first parking lot to a parking space;
   second estimated duration from a current location of the first vehicle to the entrance of the first parking lot;
   third estimated duration from an entrance of the second parking lot to a parking space;
   fourth estimated duration from the current location of the first vehicle to the entrance of the second parking lot; and
   a distance between the second parking lot and the first parking lot; and
   when the processing unit is configured to display the prompt option, the processing unit is further configured to display prompt information, wherein the prompt information comprises the parking lot information.
Embodiment 16. The apparatus according to embodiment 14 or 15, wherein the processing unit is further configured to:
   if an operation that the user chooses not to change the destination to the second parking lot is detected, when determining that the first parking lot is congested, sending congestion status information of the first parking lot to the server.
Embodiment 17. The apparatus according to embodiment 16, wherein the processing unit determines that the first parking lot is congested, and is specifically configured to:
   when one or more of the following conditions 1 to 4 are met, determine that the first parking lot is congested:
   condition 1: an average travel speed at which the first vehicle reaches the entrance of the first parking lot from a first location is less than a first speed threshold, wherein a distance between the first location and the entrance of the first parking lot is a second length;
   condition 2: first duration in which the first vehicle reaches the entrance of the first parking lot from the first location exceeds a third threshold;
   condition 3: second duration in which the first vehicle reaches a target parking space in the first parking lot from the entrance of the first parking lot exceeds a fourth threshold; and
   condition 4: third duration in which the first vehicle reaches the target parking space in the first parking lot from the first location exceeds a fifth threshold.
Embodiment 18. The apparatus according to embodiment 16 or 17, wherein after the sending unit sends the congestion status information of the first parking lot to the server,
   the receiving unit is further configured to receive a detection indication from the server, wherein the detection indication indicates the first vehicle to track a congestion status of the first parking lot; and
   the sending unit is further configured to: in a process in which the first vehicle arrives at the first parking lot, sending, to the server at intervals of specified duration, information indicating a road condition of the first parking lot.
Embodiment 19. The apparatus according to any one of embodiments 14 to 18, wherein
   when the first vehicle enters the second parking lot, the receiving unit is further configured to receive a third route planned by the server, wherein a destination of the third route is a target parking space in the second parking lot; and
   the processing unit is further configured to drive to the target parking space based on the third route.
Embodiment 20. The apparatus according to embodiment 19, wherein the sending unit is further configured to:
   in a process of driving to the target parking space based on the third route, when a first parking space is detected, sending parking space information of the first parking space to the server, wherein the parking space information of the first parking space comprises one or more of a parking space location, a parking space identifier, confidence, or detection time of the first parking space, and the confidence indicates a probability that the first parking space is an idle parking space.
Embodiment 21. A parking information transmission apparatus, comprising:
   a receiving unit, configured to receive destination information sent by a first vehicle, wherein the destination information indicates that a destination of the first vehicle is a first parking lot; and
   a sending unit, configured to: when determining, based on statistical data, that the first parking lot is congested, send, to the first vehicle, parking lot information that describes a recommended parking lot, wherein
   the statistical data comprises at least congestion status information of the first parking lot that is reported by N vehicles when the first parking lot is congested, and a difference between a moment at which the N vehicles report the congestion status information of the first parking lot and a moment at which the destination information is received is less than or equal to first preset duration; and
   the parking lot information comprises an identifier of a second parking lot and a navigation route of the first vehicle to the second parking lot, and a first distance between the second parking lot and the first parking lot is not greater than a first threshold.
Embodiment 22. The apparatus according to embodiment 21, wherein the N vehicles comprise only a second vehicle, congestion status information of the first parking lot reported by the second vehicle indicates that the first parking lot is congested, the statistical data further comprises confidence of the second vehicle, and the confidence of the second vehicle indicates accuracy of congestion statuses of a plurality of parking lots that are historically reported by the second vehicle; and
   the parking information transmission apparatus further comprises a processing unit, and when the processing unit determines based on the statistical data, that the first parking lot is congested, the processing unit is specifically configured to:
   when the confidence of the second vehicle is greater than or equal to a first confidence threshold, determine that the first parking lot is congested.
Embodiment 23. The apparatus according to embodiment 21, wherein N is greater than 1 and N is less than a first preset quantity, congestion status information of the first parking lot reported by each of the N vehicles indicates that the first parking lot is congested, and confidence of the N vehicles indicates accuracy of congestion statuses of a plurality of parking lots that are historically reported by the N vehicles;
   the parking information transmission apparatus further comprises a processing unit, and when the processing unit based on the statistical data, that the first parking lot is congested, the processing unit is specifically configured to:
   when determining that an average value of the confidence of the N vehicles is greater than a third threshold, determine that the first parking lot is congested.
Embodiment 24. The apparatus according to any one of embodiments 21 to 23, wherein the sending unit is further configured to:
   when the first vehicle enters the second parking lot, send a third route to the first vehicle when determining, based on the statistical data, that a first parking space is an idle parking space, wherein a destination of the third route is the first parking space, wherein
   the statistical data further comprises parking space information of the first parking space that is reported by M vehicles when the M vehicles detect the first parking space in the second parking lot, the parking space information of the first parking space indicates whether the first parking space is an idle parking space, and a difference between a moment at which the M vehicles report the parking space information of the first parking space and a moment at which the first vehicle enters the second parking lot is less than or equal to second preset duration.
Embodiment 25. The apparatus according to embodiment 24, wherein the M vehicles comprise only a third vehicle, parking space information of the first parking space reported by the third vehicle comprises confidence of the first parking space, and the confidence of the first parking space indicates a probability that the first parking space is an idle parking space; and
   the parking information transmission apparatus further comprises a processing unit, and when the processing unit determines based on the statistical data, that the first parking space is an idle parking space, the processing unit is specifically configured to:
   when the confidence of the first parking space is greater than or equal to a second confidence threshold, determine that the first parking space is an idle parking space.
Embodiment 26. The apparatus according to embodiment 24, wherein M is greater than 1 and less than a second preset quantity, the parking space information of the first parking space reported by the M vehicles comprises confidence of the first parking space, and the confidence of the first parking space indicates a probability that the first parking space is an idle parking space; and
   the parking information transmission apparatus further comprises a processing unit, and when the processing unit determines based on the statistical data, that the first parking space is an idle parking space, the processing unit is specifically configured to:
   when determining that an average value of the confidence of the first parking space reported by the M vehicles is greater than a third threshold, determine that the first parking space is an idle parking space.
Embodiment 27. A parking information transmission apparatus, comprising at least one processor and at least one memory, wherein
   the one or more memories store one or more computer programs, the one or more computer programs comprise instructions, and when the instructions are executed by the one or more processors, the parking information transmission apparatus is enabled to perform the method according to any one of embodiments 1 to 7 or the method according to any one of embodiments 8 to 13.
Embodiment 28. A computer-readable storage medium, wherein the computer-readable storage medium comprises program instructions, and when the program instructions are run on a computer, the computer is enabled to perform the method according to any one of embodiments 1 to 7, or perform the method according to any one of embodiments 8 to 13.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A parking information transmission method, applied to a first vehicle, wherein the method comprises:
sending destination information to a server, wherein the destination information indicates that a destination of the first vehicle is a first parking lot;
when the first parking lot is congested during a period of a driving path of the first vehicle to the first parking lot, displaying prompt information, wherein the prompt information comprises an identifier of a second parking lot and a navigation route of the first vehicle to the second parking lot received from the server, and a first distance between the second parking lot and the first parking lot is not greater than a first threshold;
detecting an operation that the user chooses to change the destination to the second parking lot, and
displaying the navigation route to the second parking lot.

2. The method according to claim 1, further comprising:
displaying a prompt option, wherein the prompt option is used to prompt a user whether to change the destination to the second parking lot.

3. The method according to claim 1 or 2, further comprising:
receiving parking lot information from the server, wherein the parking lot information comprises one or more of the following:
first estimated duration from an entrance of the first parking lot to a parking space;
second estimated duration from a current location of the first vehicle to the entrance of the first parking lot;
third estimated duration from an entrance of the second parking lot to a parking space;
fourth estimated duration from the current location of the first vehicle to the entrance of the second parking lot; and
a distance between the second parking lot and the first parking lot.

4. The method according to any one of claims 1 to 3, further comprising:
when determining that the first parking lot is congested, sending congestion status information of the first parking lot to the server.

5. The method according to claim 4, wherein the determining that the first parking lot is congested further comprises:
when one or more of the following conditions 1 to 4 are also met, determining that the first parking lot is congested:
condition 1: an average travel speed at which the first vehicle reaches the entrance of the first parking lot from a first location is less than a first speed threshold, wherein a distance between the first location and the entrance of the first parking lot is a second length;
condition 2: first duration in which the first vehicle reaches the entrance of the first parking lot from the first location exceeds a third threshold;
condition 3: second duration in which the first vehicle reaches a target parking space in the first parking lot from the entrance of the first parking lot exceeds a fourth threshold; and
condition 4: third duration in which the first vehicle reaches the target parking space in the first parking lot from the first location exceeds a fifth threshold.

6. A parking information transmission apparatus (800), applied to a first vehicle and comprising:
means for sending destination information to a server, wherein the destination information indicates that a destination of the first vehicle is a first parking lot;
means for, when the first parking lot is congested during a period of a driving path of the first vehicle to the first parking lot, displaying prompt information, wherein the prompt information comprises an identifier of a second parking lot and a navigation route of the first vehicle to the second parking lot received from the server, and a first distance between the second parking lot and the first parking lot is not greater than a first threshold;
means for detecting an operation that the user chooses to change the destination to the second parking lot, and
means for displaying the navigation route to the second parking lot.

7. The apparatus (800) according to claim 6, further comprising:
means for displaying a prompt option, wherein the prompt option is used to prompt a user whether to change the destination to the second parking lot.

8. The apparatus (800) according to claim 6 or 7, further comprising:
means for receiving parking lot information from the server, wherein the parking lot information comprises one or more of the following:
first estimated duration from an entrance of the first parking lot to a parking space;
second estimated duration from a current location of the first vehicle to the entrance of the first parking lot;
third estimated duration from an entrance of the second parking lot to a parking space;
fourth estimated duration from the current location of the first vehicle to the entrance of the second parking lot; and
a distance between the second parking lot and the first parking lot.

9. The apparatus (800) according to any one of claims 6 to 8, further comprising:
means for sending congestion status information of the first parking lot to the server when determining that the first parking lot is congested.

10. A chip, wherein the chip is coupled to a memory in an electronic device, and is configured to perform the method according to any one of claims 1 to 5.

11. A computer program product, that includes a computer program, wherein when the computer program is run, a computer is enabled to perform the method according to any one of claims 1 to 5.
